# DEMANDE DE BREVET EUROPEEN

(11) **EP 1 249 719 A2**
(43) Date de publication de la demande: **16.10.2002**
(21) Numéro de dépôt: 02290726.5
(22) Date de dépôt: 21.03.2002
(51) Int. Cl.: G02B 6/245

(54) **Procédé de dénudage d'une fibre optique**

(30) Priorité: 12.04.2001 FR 0105032
(71) Demandeur: ALCATEL, 75088 Paris (FR)
(72) Inventeur: Beffroy, David, 91390 Morsang-Sur-Orge (FR); Girardon, Valérie, 91220 Bretigny/Orge (FR); Loury, Hervé, 35210 Chatillon-en-Vendelais (FR)
(74) Mandataire: Fournier, Michel Robert Marie

(57) **Abrégé**

L'invention concerne un procédé de dénudage d'une fibre optique (1) comportant un guide d'onde en silice (2) et un revêtement (3) à retirer sur une portion à dénuder (4), caractérisé en ce que ledit procédé comporte les étapes suivantes :
- réalisation d'au moins une entaille (10) dans le revêtement (3) de la portion à dénuder (4) ;
- dépôt d'un gel décapant (50) sur le revêtement (3) de la portion à dénuder (4) ;
- nettoyage de la portion à dénuder (4) de manière à retirer ledit revêtement (3) et à faire apparaître la silice (2) de la fibre (1).

## Description

La présente invention concerne un procédé de dénudage d'une fibre optique consistant à retirer la gaine de la fibre sur une zone particulière de cette dernière.

Une fibre optique se compose d'un coeur entouré d'une couche de gaine délimitant un guide d'onde optique entouré d'une couche de revêtement qui apporte une protection à l'ensemble de la fibre optique. Généralement, le coeur et la gaine de la fibre optique sont en silice et la couche de revêtement est composée de polymères.

Les applications des fibres optiques sont multiples et variées. Pour certaines de ces applications, il est nécessaire d'effectuer des manipulations sur le guide optique en silice, comme par exemple la photo-inscription d'un réseau de Bragg. Afin de réaliser une telle opération, la fibre doit être dénudée, gravée, puis regainée. Il peut également être nécessaire de dénuder la fibre optique à une extrémité, par exemple pour une soudure ou une connexion. Le procédé selon l'invention permet de réaliser un dénudage de la fibre optique sur une portion quelconque de celle-ci, tant centrale qu'à une extrémité. Par dénudage, on entend le retrait du polymère de protection du guide optique constitué par le coeur et la gaine, c'est à dire dans la suite du texte le retrait du revêtement afin de mettre à nue la silice.

La présente invention concerne essentiellement un procédé de dénudage d'une fibre optique afin de mettre à nue la silice.

Divers procédés de dénudage sont connus de l'art antérieur. De lourdes contraintes pèsent cependant sur les procédés de dénudage. En effet, la longueur de la portion de fibre dénudée doit être bien contrôlée, la bonne tenue de la fibre à la rupture doit être assurée, et les arrêts de revêtement aux limites de la portion dénudée doivent être nets.

De plus, la fibre dénudée devient extrêmement fragile et délicate à manipuler.

Un procédé couramment utilisé dans l'art antérieur est décrit dans une publication : « Effect of chemical stripping on the strength and surface morphology of fused silica optical fiber ». Proc. Soc. Photo Optique Instrumentation Eng., vol 2074 pp 52-58. Un tel procédé consiste à plonger la portion de fibre à dénuder dans un bain d'acide sulfurique à 98% chauffé à 180-200°C pendant 20 secondes. Pour ce faire, il est nécessaire de lover la fibre. La fibre dénudée est ensuite nettoyée avec de l'éthanol et/ou de l'acétone.

Ce procédé de l'art antérieur comporte de nombreux inconvénients. Le lovage de la fibre immergée dans le bain d'acide augmente le risque de toucher la silice, mise à nue après dégradation du polymère du revêtement, ce qui entraîne une chute de la tenue à la résistance mécanique de la fibre dénudée. Il est en outre difficile de maîtriser la longueur de la portion dénudée parce que l'acide sulfurique migre rapidement dans le revêtement par capillarité. Il en résulte des arrêts de revêtement flous (dits en choux fleur dans le jargon de l'art).

La mise en oeuvre de ce procédé est en outre dangereuse du fait de la proximité de produits inflammables, tels que les alcools, avec l'acide sulfurique pur. Les risques de brûlure à l'acide ne sont pas négligeables. Tout cela entraîne de lourdes contraintes industrielles quant à la température, le degré d'humidité et bien sûr les règles de manipulation des produits.

D'autres procédés connus de l'art antérieur sont basés sur le principe d'un ramollissement par chauffage du revêtement de la fibre qui -est ensuite retiré par grattage.

Par exemple, la demande de brevet internationale WO 00/02076 propose, pour dénuder une fibre optique à son extrémité, un procédé consistant à chauffer la fibre et à racler le revêtement lorsque celui-ci a atteint un ramollissement suffisant.

De même, le brevet américain US 6 123 801 décrit, pour dénuder une fibre optique sur une portion quelconque y compris interne, un procédé consistant à produire un jet de gaz inerte et chaud de manière à ramollir le revêtement. La puissance de ce jet est telle que le revêtement est soufflé de la fibre lorsqu'il est suffisamment ramolli. Le jet est ainsi déplacé tout au long de la portion de fibre à dénuder.

Ces procédés de l'art antérieur présentent en tout ou parti les inconvénients déjà cités, en particulier l'utilisation d'un procédé à chaud.

En outre, il est à noter qu'aucun des procédés connus de l'art antérieur n'a encore été industrialisé à grande échelle.

L'objectif de la présente invention est de résoudre les inconvénients de l'art antérieur.

A cet effet, l'invention propose un procédé en deux étapes, une première étape mécanique consistant à réaliser au moins une entaille dans le revêtement de la fibre, et une seconde étape chimique consistant à ramollir ledit revêtement par action d'un gel décapant. Le procédé selon l'invention permet d'obtenir une portion dénudée aux bords nets et à la longueur parfaitement contrôlée tout en garantissant une bonne tenue de la fibre optique à la rupture.

L'invention concerne plus spécifiquement un procédé de dénudage d'une fibre optique comportant un guide optique en silice et un revêtement à retirer sur une portion à dénuder, caractérisé en ce que ledit procédé comporte les étapes suivantes :
- réalisation d'au moins une entaille dans le revêtement de la portion à dénuder ;
- dépôt d'un gel décapant sur le revêtement de la portion à dénuder ;
- nettoyage de la portion à dénuder de manière à retirer ledit revêtement et à faire apparaître la silice de la fibre.

Selon une caractéristique, l'entaille présente une profondeur contrôlée selon la fibre à dénuder de manière à préserver le guide optique de la fibre.

Selon une autre caractéristique, l'entaille est de forme circulaire.

Selon une application, au moins deux entailles sont réalisées dans le revêtement de la portion à dénuder, l'espacement entre les entailles étant adapté à la longueur de la portion de la fibre à dénuder.

Selon une caractéristique de l'invention, la portion à dénuder est positionnée dans un réceptacle apte à recevoir le gel décapant.

Selon une caractéristique, le gel décapant présente une viscosité adaptée comprise entre 3000 et 5000 cps.

Selon une caractéristique, le nettoyage de la portion à dénuder est réalisé au moyen de jets nettoyants aptes à nettoyer la surface de la silice et à casser net le revêtement en bordure de ladite portion à dénuder.

Selon une caractéristique de mise en oeuvre de l'invention, la fibre optique est positionnée dans une cassette de manière à maintenir en tension la portion à dénuder.

Selon une caractéristique, la tension de la portion à dénuder de la fibre optique est contrôlée ; et la cassette comporte des moyens d'indexation.

Selon une particularité avantageuse, la fibre optique est maintenue dans la cassette tout au long du procédé de dénudage.

Selon les modes de réalisation, la portion à dénuder est située en milieu de fibre ou en extrémité de fibre.

La présente invention concerne en outre un dispositif de mise en oeuvre du procédé selon l'invention, caractérisé en ce qu'il comporte au moins les équipements suivants :
- une station de réalisation d'au moins une entaille dans le revêtement de la portion de fibre à dénuder ;
- une station de dénudage apte à effectuer les opérations suivantes :
   - positionner la portion de fibre à dénuder dans un réceptacle ;
   - déposer un gel décapant dans ledit réceptacle et le laisser agir sur le revêtement de la fibre ;
   - nettoyer et sécher la portion de fibre dénudée.

Selon une caractéristique, le dispositif de mise en oeuvre du procédé comporte en outre une cassette portant la fibre optique et apte à maintenir la portion de fibre à dénuder en tension.

La présente invention concerne également une fibre optique constituée d'un guide d'onde en silice et d'un revêtement retiré sur une portion dénudée, caractérisée en ce que les arrêts de revêtement en bordure de la portion dénudée sont lisses et présentent un biais dont la profondeur est inférieure à deux fois le diamètre de la fibre optique.

Le procédé selon l'invention permet de tenir le cahier des charges définis par les contraintes de tenue mécanique de la fibre, de longueur contrôlée et répétable de la portion dénudée et de qualité des arrêts de revêtement.

En outre, le procédé selon l'invention peut être mené à bien à température ambiante et sans manipulation de produits dangereux instables. Le gel décapant est stable à température et degré d'humidité ambiants.

De plus, le procédé selon l'invention se prête aisément à une industrialisation de masse.

D'autres particularités et avantages de l'invention apparaîtront clairement à la lecture de la description qui suit, faite à titre d'exemple illustratif et non limitatif et en regard aux figures annexées sur lesquels :
- la figure 1 est un schéma de la cassette utilisée pour tenir la fibre optique ;
- la figure 2 illustre schématiquement les entailles réalisées dans la fibre selon le procédé de l'invention ;
- les figures 3a à 3c sont des vues schématiques de l'étape de réalisation des entailles selon le procédé de l'invention ;
- les figures 4a et 4b illustrent schématiquement l'étape de dénudage selon le procédé de l'invention respectivement par une vue de dessus et une vue en coupe ;
- la figure 5 illustre schématiquement l'étape de nettoyage selon le procédé de l'invention ;
- la figure 6 illustre schématiquement l'étape de séchage selon le procédé de l'invention ;
- la figure 7 illustre schématiquement une bordure de portion dénudée obtenue selon le procédé de l'invention ;
- la figure 8 est un graphe illustrant la probabilité de rupture de la fibre optique en fonction de la force de tension exercée.

La description qui suit concerne un procédé de dénudage d'une fibre optique quelque soit le diamètre et le type de revêtement de ladite fibre et quelque soit la longueur et l'emplacement de la portion de fibre à dénuder. En particulier, le procédé s'applique au dénudage d'une portion située en milieu de la fibre ou au dénudage d'une extrémité de la fibre.

Le dispositif de mise en oeuvre du procédé selon l'invention est adaptable à tout type de fibre optique ainsi qu'à tout type de revêtement de nature différente, comme par exemple des revêtements en époxy, en polyuréthane, en silicone ou autre.

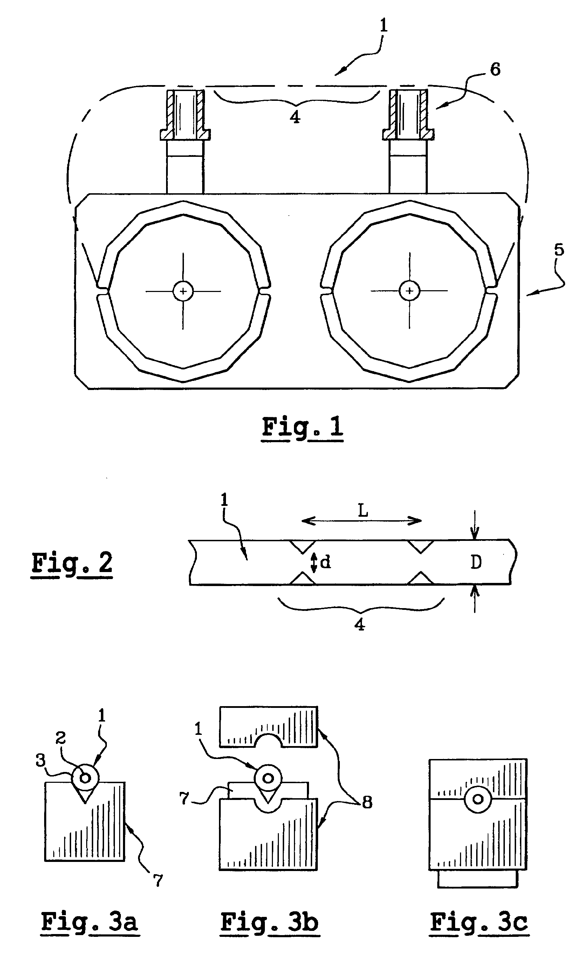

Dans un premier temps et en se référant à la figure 1, la fibre optique 1 à dénuder est disposée dans une cassette 5, c'est à dire dans un support comportant deux enroulements et une portion centrale sous tension.

Une portion de la fibre optique 1, la portion à dénuder 4 en l'occurrence, est donc maintenue en légère tension dans cette cassette 5. Une pince 6 permet avantageusement de contrôler la tension de la portion de fibre à dénuder 4 et assure un positionnement constant de la fibre 1 tout au long du procédé.

La disposition d'une fibre optique 1 dans un tel support cassette 5 est connu par ailleurs et exploité dans le cadre de cette invention. La cassette 5 comporte en particulier des moyens d'accroche sur divers supports adéquats et des moyens d'indexation connus en soi.

La première étape spécifique au procédé selon l'invention consiste à réaliser au moins une entaille dans le revêtement de la fibre. Si la portion de fibre à dénuder est située en extrémité de fibre, une seule entaille dans le revêtement peut suffire. Si la portion à dénuder est située en milieu de fibre, il est préférable de réaliser au moins deux entailles dans le revêtement, comme cela est illustré schématiquement sur la figure 2.

Selon un mode de réalisation préférentiel, les entailles 10 ont une forme circulaire de diamètre d pour un résultat optimal. Néanmoins, ces entailles 10 peuvent être carrées par exemple si des contraintes d'outillage l'imposent.

Le nombre d'entailles 10 ainsi que leur espacement L et leur diamètre d dépendent essentiellement de la longueur de la portion à dénuder 4 et du type de la fibre 1, c'est à dire de son diamètre D et du matériau composant le revêtement 3. Les entailles 10 ne doivent pas entamer le guide optique en silice de la fibre et ne doivent pas se situer aux extrémités de la portion à dénuder.

A titre d'exemple, pour une fibre optique 1 de 250µm de diamètre D à dénuder sur une longueur 4 de 85mm, deux entailles 10 sont suffisantes avec L compris entre 65 et 75mm et d compris entre 170 et 200µm.

Les figures 3a à 3c illustrent schématiquement les sous étapes de la réalisation des entailles 10 dans le revêtement 3 de la fibre 1.

La fibre 1, maintenue dans la cassette, est placée dans un support 7 présentant une rainure en V perpendiculaire à la longueur de la fibre. Des couteaux 8 sont alors actionnés pour sectionner le revêtement 3 de la fibre 1 sans toucher au guide optique 2. Ces couteaux 8 peuvent être facilement remplacés et leur espacement réglé selon le type de fibre à entailler.

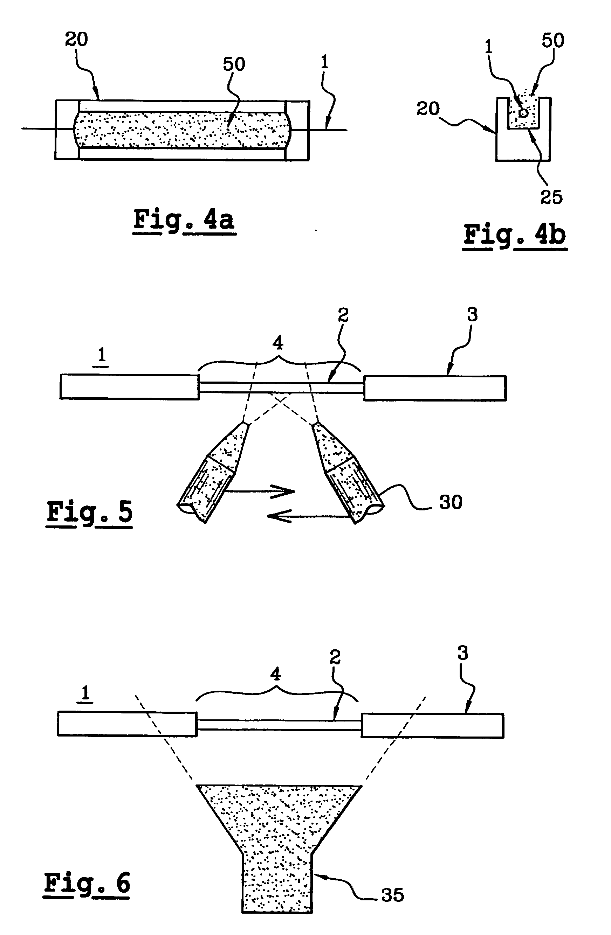

La seconde étape spécifique au procédé selon l'invention consiste à déposer un gel décapant sur la portion de fibre à dénuder, comme cela est illustré schématiquement sur les figures 4a et 4b. Pour ce faire, la portion de fibre à dénuder 4 est positionnée dans un réceptacle 20 apte à recevoir le gel décapant 50.

Le réceptacle 20 est constitué d'un matériau compatible avec le gel décapant 50, par exemple un plastique. Il comporte une rainure 25 (figure 4b) dont la largeur et la profondeur dépendent de la fibre optique 1 à dénuder. Par exemple, pour une fibre de 250µm de diamètre D, une rainure en U de 3mm par 3mm est bien adaptée. De même, la longueur de la rainure 25 est directement liée à la longueur de la portion à dénuder 4 (figure 4a). Ainsi, pour un dénudage de la fibre 1 sur 85mm, une rainure de 84mm est bien adaptée.

Le gel décapant 50 utilisé dans le cadre de cette invention présente une composition adaptée comprenant au moins un solvant apte à gonfler et ramollir le matériau constituant le revêtement de la fibre (polymère ou autre). Le gel 50 pénètre dans les entailles 10 préalablement pratiquées dans le revêtement, et par effet de capillarité, détériore ledit revêtement sur la portion à dénuder. Le gel 50 présente une viscosité adaptée optimale (par exemple comprise entre 3000 et 5000 cps) de manière à enrober le revêtement de la fibre sur tout son périmètre et à pouvoir pénétrer dans les entailles et se propager par capillarité dans le revêtement. La viscosité du gel est en outre adaptée pour ne pas migrer au delà du réceptacle 20 dont la longueur définit la longueur du dénudage.

La fibre optique 1 est maintenue dans le réceptacle 20 pendant un temps contrôlé de manière à laisser le gel décapant 50 agir sur le revêtement de la fibre. Le temps d'action du gel dépend essentiellement du diamètre et du type de matériau constituant le revêtement à ôter et peut varier de quelques secondes à quelques minutes.

Le procédé selon l'invention comporte en outre une étape de nettoyage illustrée sur la figure 5 et une étape de séchage illustrée sur la figure 6. Des jets nettoyants 30, par exemple de l'éthanol, sont projetés sur la portion à dénuder 4 de manière à retirer le revêtement ramolli et faire apparaître le guide optique 2 de la fibre 1. Les jets 30 ont une pression contrôlée de manière à ôter toute trace du gel décapant 50 pour laver la silice 2 et à casser net le revêtement 3 ramolli en bordure de la portion à dénuder 4. Une étape de séchage de la silice 2 suit le nettoyage, par exemple par une projection d'azote sec 35.

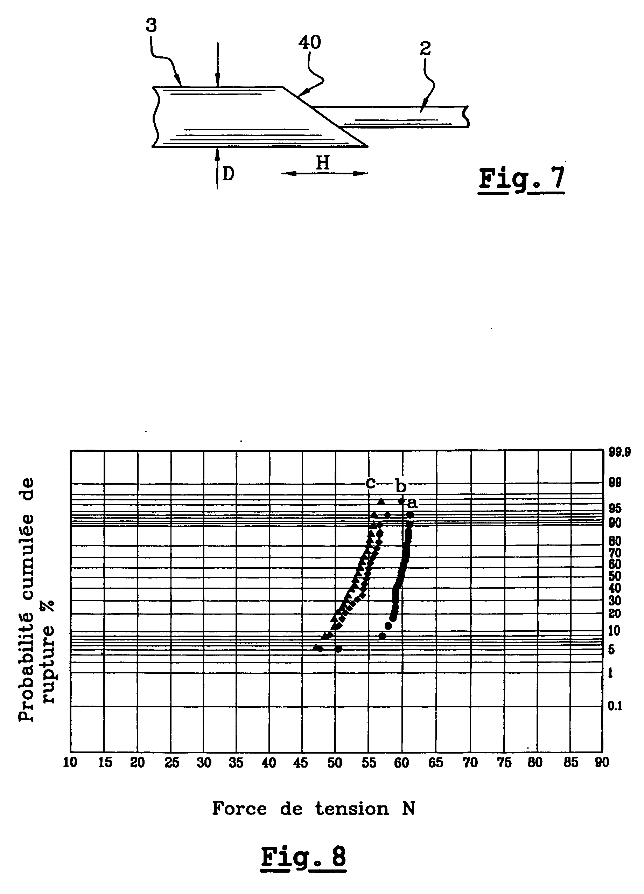

La figure 7 illustre schématiquement un arrêt de revêtement 40 obtenu avec un procédé de dénudage selon l'invention. L'arrêt de gaine 40 peut être biaisé, comme illustré sur la figure, mais le biais est net et sa profondeur H est inférieure à deux fois le diamètre D de la fibre 1 (H ≤ 2D).

Il ressort clairement de la description que le procédé selon l'invention est totalement mené à température et atmosphère ambiantes.

Les risques de détérioration de la silice mise à nue sont en outre réduits car la fibre est maintenue positionnée dans la cassette tout au long du procédé. Avantageusement, la fibre peut également rester dans la cassette lors de l'étape de photo-inscription.

De plus, la résistance de la fibre à la traction n'est pas diminuée par l'opération de dénudage car elle est maintenue droite tout au long du procédé au moyen de la cassette, les risques de toucher la silice avec un objet dur sont donc fortement minimisés.

Le graphe de la figure 8 illustre bien ce résultat. La courbe (a) correspond à une fibre optique avec revêtement. La courbe (b) correspond à une fibre dénudée sur une longueur de 36mm et la courbe (c) à une fibre dénudée sur une longueur de 85mm.

Il est à noter en outre que le procédé selon l'invention permet d'obtenir une portion de fibre dénudée parfaitement contrôlée, les tolérances sur les longueurs de dénudage étant de l'ordre de ±1mm, et reproductible sur une pluralité de fibre optique.

## Revendications

1. Procédé de dénudage d'une fibre optique (1) comportant un guide optique en silice (2) et un revêtement (3) à retirer sur une portion à dénuder (4), **caractérisé en ce que** ledit procédé comporte les étapes suivantes :
- réalisation d'au moins une entaille (10) dans le revêtement (3) de la portion à dénuder (4) ;
- dépôt d'un gel décapant (50) sur le revêtement (3) de la portion à dénuder (4) ;
- nettoyage de la portion à dénuder (4) de manière à retirer ledit revêtement (3) et à faire apparaître la silice (2) de la fibre (1).

2. Procédé de dénudage selon la revendication 1, **caractérisé en ce que** l'entaille (10) présente une profondeur (d) contrôlée selon la fibre à dénuder de manière à préserver le guide optique (2) de la fibre (1).

3. Procédé de dénudage selon l'une quelconque des revendications précédentes, **caractérisé en ce que** l'entaille (10) est de forme circulaire.

4. Procédé de dénudage selon l'une quelconque des revendications précédentes, **caractérisé en ce que** au moins deux entailles sont réalisées dans le revêtement de la portion à dénuder, l'espacement (L) entre les entailles (10) étant adapté à la longueur de la portion de la fibre à dénuder (4).

5. Procédé de dénudage selon l'une quelconque des revendications précédentes, **caractérisé en ce que** la portion à dénuder (4) est positionnée dans un réceptacle (20) apte à recevoir le gel décapant (50).

6. Procédé de dénudage selon l'une quelconque des revendications précédentes, **caractérisé en ce que** le gel décapant (50) présente une viscosité adaptée comprise entre 3000 et 5000 cps.

7. Procédé de dénudage selon l'une quelconque des revendications précédentes, **caractérisé en ce que** le nettoyage de la portion à dénuder (4) est réalisé au moyen de jets nettoyants (30) aptes à nettoyer la surface de la silice (2) et à casser net le revêtement (3) en bordure de ladite portion à dénuder.

8. Procédé de dénudage selon l'une quelconque des revendications précédentes, **caractérisé en ce qu'**il comporte en outre une étape de séchage de la portion dénudée (4).

9. Procédé de dénudage selon l'une quelconque des revendications précédentes, **caractérisé en ce que** la fibre optique (1) est positionnée dans une cassette (5) de manière à maintenir en tension la portion à dénuder (4).

10. Procédé de dénudage selon la revendication 9, **caractérisé en ce que** la tension de la portion à dénuder (4) de la fibre optique est contrôlée.

11. Procédé de dénudage selon la revendication 9, **caractérisé en ce que** la cassette (5) comporte des moyens d'indexation.

12. Procédé de dénudage selon la revendication 9, **caractérisé en ce que** la fibre optique (1) est maintenue dans la cassette (5) tout au long du procédé de dénudage.

13. Procédé de dénudage selon l'une quelconque des revendications 1 à 12, **caractérisé en ce que** la portion à dénuder (4) est située en milieu de fibre (1).

14. Procédé de dénudage selon l'une quelconque des revendications 1 à 12, **caractérisé en ce que** la portion à dénuder (4) est située en extrémité de fibre (1).

15. Dispositif de mise en oeuvre du procédé selon les revendications 1 à 14, **caractérisé en ce qu'**il comporte au moins les équipements suivants :
- une station de réalisation d'au moins une entaille (10) dans le revêtement de la portion de fibre à dénuder (4) ;
- une station de dénudage apte à effectuer les opérations suivantes :
- positionner la portion de fibre à dénuder (4) dans un réceptacle (20) ;
- déposer un gel décapant (50) dans ledit réceptacle (20) et le laisser agir sur le revêtement (3) de la fibre (1) ;
- nettoyer et sécher la portion de fibre dénudée (4).

16. Dispositif selon la revendication 15, **caractérisé en ce qu'**il comporte en outre une cassette (5) portant la fibre optique (1) et apte à maintenir la portion de fibre à dénuder (4) en tension.

17. Fibre optique (1) constituée d'un guide d'onde (2) en silice et d'un revêtement (3) retiré sur une portion dénudée (4), **caractérisée en ce que** les arrêts de revêtement (3) en bordure de la portion dénudée (4) sont lisses et présentent un biais (40) dont la profondeur (H) est inférieure à deux fois le diamètre (2D) de la fibre optique (1).
